# EUROPÄISCHE PATENTSCHRIFT

(11) **EP 3 381 041 B1**
(45) Veröffentlichungstag und Bekanntmachung des Hinweises auf die Patenterteilung: **24.07.2019**
(21) Anmeldenummer: 16787729.9
(22) Anmeldetag: 25.10.2016
(51) Int. Cl.: H01F 7/127, H01F 7/06

(54) **ELEKTRISCHE ANSCHLUSSEINRICHTUNG**
ELECTRICAL CONNECTION DEVICE
DISPOSITIF DE CONNEXION ÉLECTRIQUE

(30) Priorität: 24.11.2015 DE 102015015243
(43) Veröffentlichungstag der Anmeldung: 03.10.2018
(73) Patentinhaber: Daimler AG, 70327 Stuttgart (DE)
(72) Erfinder: ALBERT, Simone, 73272 Neidlingen (DE); GALL, Fabian, 72461 Albstadt (DE); LONATI, Alessandro, 25082 Botticino (BS) (IT); SANTULLI, Renato, 25128 Brescia (BS) (IT)
(74) Vertreter: JENSEN & SON
(86) Internationale Anmeldenummer: PCT/EP2016/001766
(87) Internationale Veröffentlichungsnummer: WO 2017/088945

(56) Entgegenhaltungen:
- EP-A1- 2 535 626
- EP-A2- 2 520 848
- WO-A1-2015/129159
- JP-A- 2007 139 116
- US-A1- 2010 032 934
- US-A1- 2015 179 326

## Beschreibung

Die Erfindung betrifft eine elektrische Anschlusseinrichtung mit einem Kontaktstecker nach der im Oberbegriff von Anspruch 1 näher definierten Art. Außerdem betrifft die Erfindung ein elektromagnetisches Ventil mit einem Temperatursensor und einer solchen elektrischen Anschlusseinrichtung. Ferner betrifft die Erfindung die Verwendung eines derartigen elektromagnetischen Ventils.

Elektromagnetische Ventile mit einem Temperatursensor sind aus dem Stand der Technik bekannt und werden beispielsweise in Druckgasbehältern eingesetzt, um einerseits die Temperatur des Mediums in dem Druckgasbehälter zu erfassen und andererseits beispielsweise eine Entnahme des Mediums aus dem Druckgasbehälter über das elektromagnetische Ventil zu steuern. Beispielhaft kann in diesem Zusammenhang auf die DE 10 2014 002 660 A1 verwiesen werden, welche einen solchen Aufbau beschreibt.

Dokumente EP2520848, US2010/032934 und JP2007139116 offenbaren weitere Beispiele von Ventil mit Temperatursensor für Druckbehälter.

In der Praxis ist es nun so, dass die Verkabelung und der Anschluss des Temperatursensors und des elektromagnetischen Ventils bzw. einer Aktuatorspule derselben vergleichsweise aufwändig ist, was den Aufbau damit hinsichtlich der Elektrik sehr aufwändig macht, wenn eine Wartung notwendig wird.

Die Aufgabe der hier vorliegenden Erfindung besteht nun darin, eine elektrische Anschlusseinrichtung für ein elektromagnetisches Ventil sowie ein elektromagnetisches Ventil anzugeben, welche/welches die genannten Nachteile vermeidet und eine einfache und zuverlässige Montage ermöglicht.

Diese Aufgabe wird erfindungsgemäß durch eine elektrische Anschlusseinrichtung mit den Merkmalen im Anspruch 1 gelöst. Eine elektromagnetische Ventileinrichtung mit einer derartigen elektrischen Anschlusseinrichtung ist im Anspruch 6 angegeben. Im Anspruch 10 ist außerdem eine besonders bevorzugte Verwendung der elektromagnetischen Ventils genannt. Weitere vorteilhafte Ausgestaltungen ergeben sich aus den jeweils abhängigen Unteransprüchen.

Bei der erfindungsgemäßen elektrischen Anschlusseinrichtung für ein elektromagnetisches Ventil mit einem Temperatursensor zum Erfassen einer Medientemperatur ist es vorgesehen, dass der elektrische Kontaktstecker Teil eines Gehäuses ist, welches außerdem eine Aktuatorspule für das Ventil und einen Steckkontakt zur elektrischen Kontaktierung des Temperatursensors bei der Montage des Gehäuses an dem Ventil aufweist. Die elektrische Anschlusseinrichtung besteht also im Wesentlichen aus einem Gehäuse, welches einerseits einen Kontaktstecker hat, um so beispielsweise die Kontaktierung mit einer elektrischen Anschlussleitung, insbesondere einem Kabelbaum bei einer Fahrzeuganwendung, zu gewährleisten. Über den einen Kontaktstecker ist dabei eine hinsichtlich der Montage sehr einfache und damit wenig fehleranfällige Kontaktierung möglich. Die elektrische Anschlusseinrichtung selbst umfasst dabei direkt die Aktuatorspule für das elektromagnetische Ventil, sodass auch diese zusammen mit dem Gehäuse montiert werden kann und nicht getrennt montiert und angeschlossen werden muss. Außerdem umfasst die elektrische Anschlusseinrichtung einen Steckkontakt, welcher bei der Montage mit dem Temperatursensor kontaktiert wird. Dabei ist der Temperatursensor beispielsweise so montiert, wie es in der eingangs genannten DE 10 2014 002 660 A1 beschrieben ist. Er ist von der Rückseite, also der dem unter Druck stehenden Medium abgewandten Seite der elektromagnetischen Ventileinrichtung, beim Einsatz als Tankventil in einem Druckgasbehälter, über eine Bohrung zugänglich. Dies macht die Montage und die elektrische Kontaktierung bei den herkömmlichen Aufbauten außerordentlich aufwändig. Mit der erfindungsgemäßen elektrischen Anschlusseinrichtung kann nun sehr einfach bei der Montage derselben eine Kontaktierung des Temperatursensors über den Steckkontakt erreicht werden, beispielsweise indem dieser so ausgebildet ist, dass er über eine Bohrung bis zum Temperatursensor bzw. seinen elektrischen Anschlüssen reicht. Dann kann durch das alleinige Aufsetzen der elektrischen Anschlusseinrichtung mit der integrierten Spule und der bei der Aufsetzung erfolgenden Kontaktierung des elektrischen Temperatursensors eine Verbindung aller notwendigen elektrischen Anschlüsse erzielt werden. Dies macht die Montage außerordentlich einfach, effizient und fehlertolerant.

Der Steckkontakt ist dabei gemäß einer vorteilhaften Weiterbildung der Idee ebenso wie die Spule mit dem Kontaktstecker verbunden, sodass über diesen einzigen Kontaktstecker die Weiterverbindung erfolgen kann, beispielsweise die Verbindung mit einem Kabelbaum zur Ansteuerung des elektromagnetischen Ventils einerseits und zur Auswertung der Temperaturdaten andererseits.

Die erfindungsgemäße Aufgabe wird auch durch ein elektromagnetisches Ventil mit einem Temperatursensor und einer derartigen erfindungsgemäßen elektrischen Anschlusseinrichtung gelöst. Eine vorteilhafte Weiterbildung der elektromagnetischen Ventileinrichtung gemäß der Erfindung sieht es dabei vor, dass der Temperatursensor und/oder seine Aufnahme in dem Ventil eine Markierung zur winkelgenauen Montage aufweist. Eine solche Markierung zur winkelgenauen Montage des Temperatursensors macht eine zuverlässige Montage der oben beschriebenen erfindungsgemäßen elektrischen Anschlusseinrichtung sehr einfach. Durch die winkelgenaue Ausrichtung des Temperatursensors sind auch dessen elektrische Kontakte winkelgenau ausgerichtet, ohne dass hier auf speziell ausgebildete Kontakte wie beispielsweise ringförmige Kontakte zurückgegriffen werden muss. Vielmehr kann durch eine winkelgenaue Montage des Temperatursensors ein ausreichend genaues Zusammenspiel mit den Gegenkontakten in dem Steckkontakt erzielt werden, sodass die Montage und der Aufbau der elektrischen Anschlusseinrichtung gemäß der Erfindung hierdurch nochmals vereinfacht wird.

Ferner kann es vorgesehen sein, dass die elektrische Anschlusseinrichtung über ein einziges lösbares Verbindungsmittel mit dem Ventil verbunden ist. Ein solches Verbindungsmittel kann insbesondere eine axial und zentral im Bereich der Spule angeordnete Schraube sein. Nach dem Aufstecken der elektrischen Anschlusseinrichtung, bei welchem eine Kontaktierung des Temperatursensors über den Steckkontakt erfolgt, kann diese auf dem Ventil gesichert werden, indem beispielsweise im Bereich der elektrischen magnetischen Spule an der oberen Ende eine Schraube eingebracht wird, um diese mit einem geeigneten Gegenelement zu verbinden. Über die einzige Schraube kann dann sowohl die Positionierung der elektromagnetischen Spule in der notwendigen Position als auch die elektrische Kontaktierung des Temperatursensors erzielt werden. Über den Kontaktstecker lässt sich dieser so vorbereitete Aufbau dann außerordentlich einfach und effizient weiter kontaktieren, wobei in dem Kontaktstecker durch eine ausreichende Zahl von Anschlusspolen die Übertragung aller notwendigen Leistungen und/oder Daten gewährleistet ist.

Ferner kann es bei dem elektromagnetischen Ventil gemäß der Erfindung in einer vorteilhaften Weiterbildung der Idee vorgesehen sein, dass der Steckkontakt der Anschlusseinrichtung und der Temperatursensor in einem Winkel von 90° zueinander verlaufen. Dies ermöglicht eine Kontaktierung der Bauteile nicht fluchtend zueinander, sondern in einem Winkel zueinander, was hinsichtlich der Montage außerordentlich einfach und auch bei höheren Bauteiltoleranzen vergleichsweise zuverlässig möglich ist, wenn die elektrischen Kontakte eine ausreichende Flexibilität und Größe aufweisen.

Das elektromagnetische Ventil mit einem Temperatursensor und die Möglichkeit dieses über die elektrische Anschlusseinrichtung außerordentlich einfach und effizient zu montieren, eignet sich nun insbesondere für den Einsatz bei Anwendungen, welche entsprechend hohe Stückzahlen erfordern. Es kann deshalb insbesondere im Bereich von Tankventilen von Druckgasbehältern eingesetzt werden, insbesondere wenn die Druckgasbehälter zur Speicherung von Treibstoff in Form von komprimiertem Erdgas oder komprimiertem Wasserstoff in Fahrzeugen ihre bevorzugte Verwendung finden.

Weitere vorteilhafte Ausgestaltungen der erfindungsgemäßen elektrischen Anschlusseinrichtung sowie des elektromagnetischen Ventils gemäß der Erfindung ergeben sich aus den restlichen abhängigen Unteransprüchen und werden anhand des Ausführungsbeispiels deutlich, welches nachfolgend unter Bezugnahme auf die Figuren näher beschrieben ist.

Dabei zeigen:
- Fig. 1: ein prinzipmäßig angedeutetes Fahrzeug mit einem Druckgasbehälter;
- Fig. 2: eine Ansicht eines elektromagnetischen Ventils in einer Ausgestaltung als Tankventil für den Druckgasbehälter;
- Fig. 3: eine Ansicht des selben Ventils aus der Blickrichtung III in Fig. 2; und
- Fig. 4: eine mögliche Ausführungsform einer elektrischen Anschlusseinrichtung gemäß der Erfindung in einer dreidimensionalen Darstellung.

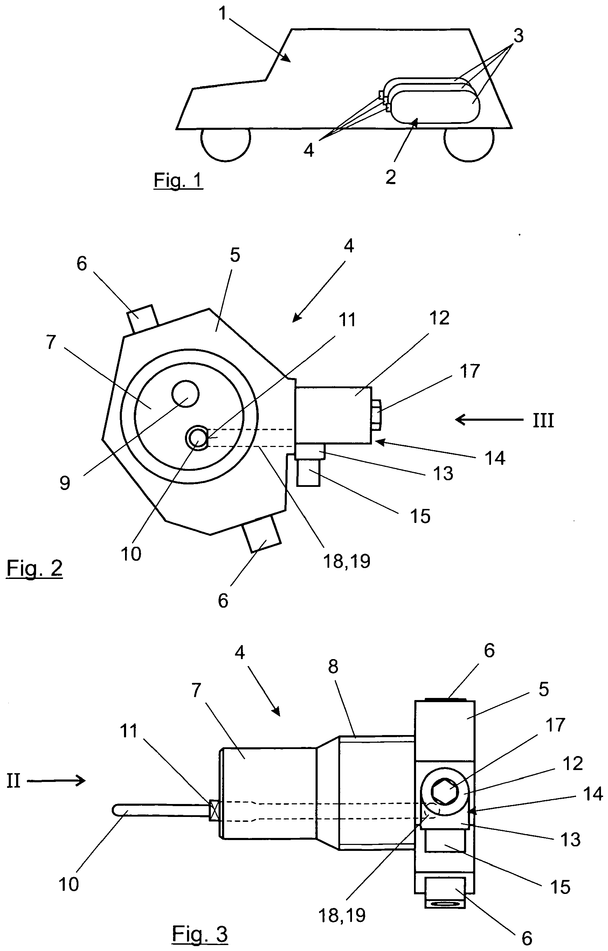

In der Darstellung der Figur 1 ist rein beispielhaft ein Fahrzeug 1 angedeutet. Dieses soll mit einem gasförmigen Treibstoff, beispielsweise komprimiertem Erdgas oder komprimiertem Wasserstoff, angetrieben werden. Der Treibstoff kann beispielsweise in einem Verbrennungsmotor oder insbesondere auch in einem Brennstoffzellensystem, für den Fall von Wasserstoff, in Antriebsleistung umgesetzt werden. Zur Speicherung des komprimierten Gases, beispielsweise Wasserstoff bei einem Nenndruck von 70 MPa, ist dabei eine Speichereinrichtung 2 in dem Fahrzeug 1 vorgesehen. Die Speichereinrichtung 2 umfasst typischerweise mehrere einzelne Druckgasbehälter 3, welche in der Darstellung der Figur 1 angedeutet sind. Jeder dieser Druckgasbehälter 3 trägt ein mit ihm verbundenes Tankventil 4, welches auch als OTV (On Tank Valve) bezeichnet wird. Ein beispielhafter Aufbau eines solchen Tankventils ist in den Darstellungen der Figuren 2 und 3 angedeutet. Das Tankventil 4 ist als elektromagnetisches Tankventil 4 ausgebildet. Es kann beispielsweise in Form eines sogenannten Pilotventils realisiert sein, welches grundlegend aus dem Stand der Technik bekannt ist, und beispielhaft in der DE 10 2013 019 879 A1 der Anmelderin beschrieben wird.

In der Darstellung der Figur 2 ist nun ein solches Tankventil 4, aus Sichtrichtung des Druckgasbehälters 3, ohne diesen jedoch darzustellen, zu erkennen. Das Tankventil 4 umfasst ein Ventilgehäuse 5, an welchem rein beispielhaft zwei mit 6 bezeichnete Anschlüsse beispielsweise zur Zufuhr und Abfuhr von Gas angedeutet sind. Mittig in dem Tankventil 4 ist dabei ein mit 7 bezeichneter Bereich zu erkennen, welcher im montierten Zustand des Tankventils 4 in den Druckgasbehälter 3 ragt. In der Darstellung der Figur 3, einer Seitenansicht aus Richtung des mit III bezeichneten Pfeils in Figur 2, ist dieser Aufbau besser zu erkennen. Ferner weist dieser in Richtung des Druckgasbehälters überstehende Bereich 7 ein mit 8 bezeichnetes Gewinde auf, welches in der Darstellung der Figur 3 angedeutet ist. Mit diesem Gewinde 8 ist das Tankventil 4 mit der entsprechenden Aufnahme, welche typischerweise als BOSS bezeichnet wird, des Druckgasbehälters 3 verschraubt.

Der Bereich 7 weist, wie es wiederum in der Darstellung der Figur 2 zu erkennen ist, eine mit 9 bezeichnete Kommunikationsverbindung auf, über die Gas in den Druckgasbehälter und aus dem Druckgasbehälter zum Tankventil 4 strömen kann. Ferner ist ein Temperatursensor 10 vorgesehen. Dieser ist in an sich bekannter Weise, und beispielsweise in der Art, wie durch die eingangs genannte DE 10 2014 002 660 A1 beschrieben, ausgebildet und umfasst eine Hülle, welche das eigentliche Sensorelement, beispielsweise einen NTC-Widerstand umschließt. Dieser Temperatursensor 10 mit seiner Hülle kann beispielsweise mit dem Bereich 7 verschraubt sein. Er weist insbesondere eine in der Darstellung der Figur 2 zu erkennende Fläche 11 auf, welche auch in der Darstellung der Figur 3 durch ein Kreuz als Fläche angedeutet ist. Dies ermöglicht eine Winkelausrichtung des Temperatursensors 10 bei der Montage, welche aus den später noch beschriebenen Gründen sinnvoll sein kann.

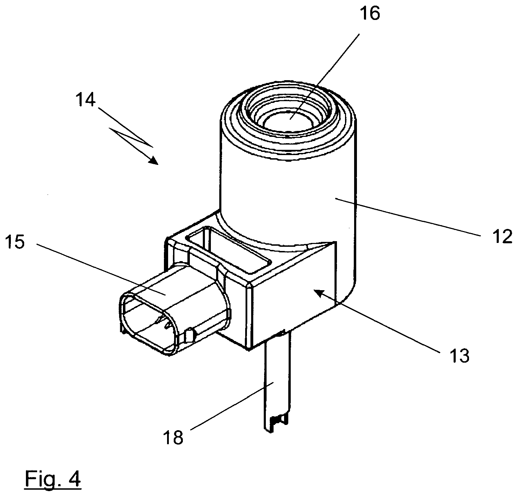

Zur Betätigung des elektromagnetisch angesteuerten Ventils 4 weist dieses als Aktuator eine elektromagnetische Spule 12 auf, welche insbesondere in der Darstellung der Figur 2 sehr gut zu erkennen ist. Sie befindet sich in einem Gehäuse 13 einer in ihrer Gesamtheit mit 14 bezeichneten elektrischen Anschlusseinrichtung. Diese weist neben der elektromagnetischen Spule 12 als weiteren Teil des Gehäuses 13 einen Kontaktstecker 15 auf, über welchen ein Anschluss beispielsweise an einem Kabelbaum des Fahrzeugs 1 erfolgen kann, um so die elektromagnetische Spule 12 als Aktuatorspule des Tankventils 4 anzusteuern. In ihrem Gesamtaufbau ist die elektrische Anschlusseinrichtung 14 in einer beispielhaften dreidimensionalen Darstellung in Figur 4 zu erkennen. Das in seiner Gesamtheit mit 13 bezeichnete Gehäuse weist die Aktuatorspule 12 insbesondere in dem Gehäuse 13 vergossen auf. Außerdem ist der Kontaktstecker 15 zu erkennen. Dieser verläuft im Wesentlichen rechtwinklig zur zentralen Achse der Aktuatorspule 12. Zur Montage der Aktuatorspule 12 kann durch eine in der Darstellung der Figur 4 mit 16 bezeichnete zentrale Öffnung in der Aktuatorspule 12 eine in den Figuren 2 und 3 mit 17 bezeichnete Schraube geführt werden, um so die elektrische Anschlusseinrichtung 14 mit dem Ventilgehäuse 5 zu verschrauben. Die Aktuatorspule 12 kann dann mit den entsprechenden Teilen beispielsweise des Pilotventils in dem Ventilgehäuse 5 in der gewünschten Art und Weise zusammenwirken.

Wie es in der Darstellung der Figur 4 zu erkennen ist, weist die elektrische Anschlusseinrichtung 14 außerdem einen mit 18 bezeichneten Steckkontakt auf. Dieser verläuft parallel zur Achse der Aktuatorspule 12 und erstreckt sich im montierten Zustand der elektrischen Anschlusseinrichtung 14 in das Ventilgehäuse 5 hinein. Dies ist in der Darstellung der Figur 2 gestrichelt angedeutet. Das Ventilgehäuse 5 weist dazu eine geeignete Öffnung 19 auf, in welche der Steckkontakt 18 hineinragen kann.

In der Darstellung der Figur 3 wiederum ist zu erkennen, dass der Temperatursensor 10 durch den gesamten Bereich 7 des Tankventils 4 ragt, beispielsweise wiederum analog zur eingangs genannten DE-Schrift. Er weist typischerweise in seinem dem Ventilgehäuse 5 zugewandten Ende entsprechende Anschlusselemente auf, welche hier nicht zu erkennen sind. Er endet im Bereich der Öffnung 19 für den Steckkontakt 18. Wird nun das elektrische Anschlusselement 14 auf das Ventilgehäuse 5 montiert, dann ragt der Steckkontakt 18 in das Ventilgehäuse 5 hinein und kommt in einen elektrisch verbindenden Eingriff mit dem Temperatursensor 10 bzw. seinen dem Ventilgehäuse 5 zugewandten Steckkontakten. Um diese Kontaktierung, welche typischerweise durch ein rechtwinkliges Zusammenstecken des Steckkontakts 18 und des Temperatursensors 10 erfolgt, sicher und zuverlässig zu gewährleisten, ist es, wie eingangs bereits erwähnt, wichtig, dass die Winkelausrichtung des Temperatursensors 10 stimmt. Hierfür könnten unterschiedliche Maßnahmen und Markierungen vorgesehen sein. In dem hier dargestellten Ausführungsbeispiel wird dies durch die mit 11 bezeichnete Fläche erzielt, welche so ausgerichtet wird, dass sie beispielsweise parallel zu der Kante des Ventilgehäuses 5 verläuft, auf welcher die elektrische Anschlusseinrichtung 14 montiert wird.

Bei montiertem Temperatursensor 10 kann also durch ein einfaches Aufstecken der elektrischen Anschlusseinrichtung 14 eine Kontaktierung des Temperatursensors 10 mit dem Steckkontakt 18 und damit letztlich mit dem Kontaktstecker 15 der elektrischen Anschlusseinrichtung 14 erzielt werden. Auch die Aktuatorspule 12 ist innerhalb der elektrischen Anschlusseinrichtung 14 mit weiteren Polen des Kontaktsteckers 15 verbunden. Es reicht also, die elektrische Anschlusseinrichtung 14 aufzustecken, um die entsprechende Kontaktierung zu erzielen. Anschließend kann sie, wie bereits erwähnt, durch die Schraube 17 gesichert werden. So entsteht die Möglichkeit, durch die elektrische Anschlusseinrichtung 14 das Tankventil 4 außerordentlich einfach elektrisch zu kontaktieren und beim Einbau bzw. der Montage die notwendigen elektrischen Verbindungen zum Kontaktstecker 15 zu gewährleisten. Über einen Anschlussstecker am Kabelbaum des Fahrzeugs 1 kann der Kontaktstecker 15 dann mit den entsprechenden Steuergeräten kontaktiert werden, um eine zuverlässige Funktionalität des Tankventils 4 und eine Auswertung des Temperatursignals zu gewährleisten.

## Patentansprüche

1. Elektrische Anschlusseinrichtung (14) für ein elektromagnetisches Ventil (4) mit einem Temperatursensor (10) zum Erfassen einer Medientemperatur, mit einem elektrischen Kontaktstecker (15),
**dadurch gekennzeichnet, dass**
der elektrische Kontaktstecker (15) Teil eines gemeinsamen Gehäuses (13) ist, welches außerdem eine Aktuatorspule (12) für das elektromagnetische Ventil (4) und einen Steckkontakt (18) zur elektrischen Kontaktierung des Temperatursensors (10) bei der Montage des Gehäuses (13) an dem Ventil (4) aufweist.

2. Elektrische Anschlusseinrichtung (14) nach Anspruch 1,
**dadurch gekennzeichnet, dass**
der Steckkontakt (18) und die Aktuatorspule (12) in dem Gehäuse (13) elektrisch mit Polen des Kontaktsteckers (15) verbunden sind.

3. Elektrische Anschlusseinrichtung (14) nach Anspruch 1 oder 2,
**dadurch gekennzeichnet, dass**
der Steckkontakt (18) fluchtend oder parallel zur zentralen Achse der Aktuatorspule (12) angeordnet ist.

4. Elektrische Anschlusseinrichtung (14) nach Anspruch 1, 2 oder 3,
**dadurch gekennzeichnet, dass**
der Kontaktstecker (15) in einem Winkel von in etwa 90° zur Aktuatorspule (12) und/oder dem Steckkontakt (18) angeordnet ist.

5. Elektromagnetisches Ventil (4) mit einem Temperatursensor und einer elektrischen Anschlusseinrichtung (14) nach einem der Ansprüche 1 bis 4.

6. Elektromagnetisches Ventil (4) nach Anspruch 5,
**dadurch gekennzeichnet, dass**
der Temperatursensor (10) und/oder seine Aufnahme in dem Ventilgehäuse (5) eine Markierung (11) zur winkelgenauen Montage aufweist.

7. Elektromagnetisches Ventil (4) nach Anspruch 5 oder 6,
**dadurch gekennzeichnet, dass**
die elektrische Anschlusseinrichtung (14) über ein einziges lösbares Verbindungsmittel (17) mit dem Ventilgehäuse (5) verbunden ist.

8. Elektromagnetisches Ventil (4) nach Anspruch 7,
**dadurch gekennzeichnet, dass**
das lösbare Verbindungsmittel als eine axial und zentral im Bereich der Aktuatorspule (12) angeordnete Schraube (17) ausgeführt ist.

9. Elektromagnetisches Ventil (4) nach einem der Ansprüche 5 bis 8,
**dadurch gekennzeichnet, dass**
der Steckkontakt (18) der elektrischen Anschlusseinrichtung (14) und der Temperatursensor (10) in einem Winkel von in etwa 90° zueinander verlaufen.

10. Verwendung eines elektromagnetischen Ventils (4) nach einem der Ansprüche 5 bis 9, als Tankventil (4) an einem Druckgasbehälter (3).

## Claims

1. Electric connection device (14) for a solenoid valve (4) with a temperature sensor (10) for detecting a medium temperature, with an electric contact plug (15),
**characterised in that**
the electric contact plug (15) is a part of a common housing (13), which in addition comprises an actuator coil (12) for the solenoid valve (4) and a plug contact (18) for electrically contacting the temperature sensor (10) when mounting the housing (13) on the valve (4).

2. Electric connection device (14) according to claim 1,
**characterised in that**
the plug contact (18) and the actuator coil (12) are electrically connected to poles of the contact plug (15) in the housing (13).

3. Electric connection device (14) according to claim 1 or 2,
**characterised in that**
the plug contact (18) is arranged flush with or parallel to the central axis of the actuator coil (12).

4. Electric connection device (14) according to claim 1, 2 or 3,
**characterised in that**
the contact plug (15) is arranged at an angle of approximately 90° to the actuator coil (12) and/or to the plug contact (18).

5. Solenoid valve (4) with a temperature sensor and an electric connection device (14) according to any of claims 1 to 4.

6. Solenoid valve (4) according to claim 5,
**characterised in that**
the temperature sensor (10) and/or its receptacle in the valve housing (5) has/have a marking (11) for precise angular assembly.

7. Solenoid valve (4) according to claim 5 or 6,
**characterised in that**
the electric connection device (14) is connected to the valve housing (5) via a single releasable connection means (17).

8. Solenoid valve (4) according to claim 7,
**characterised in that**
the releasable connection means is designed as a screw (17) located axially and centrally in the region of the actuator coil (12).

9. Solenoid valve (4) according to any of claims 5 to 8,
**characterised in that**
the plug contact (18) and the temperature sensor (10) extend at an angle of approximately 90° to each other.

10. Use of a solenoid valve (4) according to any of claims 5 to 9 as a tank valve (4) on a compressed gas tank (3).

## Revendications

1. Dispositif de connexion électrique (14) pour une soupape électromagnétique (4) comprenant un capteur de température (10) servant à détecter une température d'un liquide, comprenant un connecteur électrique (15),
**caractérisé en ce que**
le connecteur électrique (15) fait partie d'un logement entier (13) qui en outre présente une bobine d'actionnement (12) pour la soupape électromagnétique (4) et un contact mâle (18) servant à la mise en contact électrique du capteur de température (10) lors du montage du logement (13) sur la soupape (4).

2. Dispositif de connexion électrique (14) selon la revendication 1,
**caractérisé en ce que**
le contact mâle (18) et la bobine d'actionnement (12) sont reliés électriquement dans le logement (13) par des pôles de connecteur électrique (15).

3. Dispositif de connexion électrique (14) selon la revendication 1 ou 2,
**caractérisé en ce que**
le contact mâle (18) est en alignement avec ou parallèle à l'axe central de la bobine d'actionnement (12).

4. Dispositif de connexion électrique (14) selon la revendication 1, 2 ou 3, **caractérisé en ce que** le connecteur (15) est disposé dans un angle d'environ 90°C par rapport à la bobine d'actionnement (12) et/ou au contact mâle (18).

5. Soupape électromagnétique comprenant un capteur de température et un dispositif de connexion électrique (14) selon l'une quelconque des revendications 1 à 4.

6. Soupape électromagnétique (4) selon la revendication 5, **caractérisée en ce que** le capteur de température (10) et/ou son logement dans le boîtier de soupape (5) présente un repère (11) pour le montage précis angulaire.

7. Soupape électromagnétique (4) selon la revendication 5 ou 6, **caractérisé en ce que** le dispositif de connexion électrique (17) est relié par un moyen de liaison amovible (17) au boîtier de soupape (5).

8. Soupape électromagnétique (4) selon la revendication 7, **caractérisé en ce que** le moyen de liaison amovible se présente sous la forme d'une vis disposé axialement et centralement dans la zone de la bobine d'actionnement (12).

9. Soupape électromagnétique (4) selon l'une quelconque des revendications 5 à 8, **caractérisée en ce que** le contact mâle (18) du dispositif de connexion électrique (14) et le capteur de température (10) forment ensemble un angle d'environ 90°C.

10. Utilisation d'une soupape électromagnétique (4) selon l'une quelconque des revendications 5 à 9, en tant que soupape de réservoir (4) sur un réservoir de gaz sous pression (3).
